# EUROPÄISCHE PATENTANMELDUNG

(11) **EP 2 422 617 A2**
(43) Veröffentlichungstag der Anmeldung: **29.02.2012**
(21) Anmeldenummer: 11006599.2
(22) Anmeldetag: 11.08.2011
(51) Int. Cl.: A01K 13/00

(54) **Einrichtung zur Pflege und/oder Reinigung von Nutztieren**

(30) Priorität: 25.08.2010 DE 102010035504
(71) Anmelder: Suevia Haiges Gmbh, 74366 Kirchheim/Neckar (DE)
(72) Erfinder: Haiges, Frank, 74366 Kirchheim/ Neckar (DE)
(74) Vertreter: Bartels & Partner

(57) **Zusammenfassung**

2. Eine Einrichtung zur Pflege und/oder Reinigung von Nutztieren, mit einem mittels einer Antriebseinrichtung um eine Drehachse in beiden Drehrichtungen antreibbaren Bürstenkörper (12), der mit einer Halteeinrichtung (2) über eine Schwenklagerung verbunden ist, die eine horizontale Schwenkachse (10) bildet, die dem Bürstenkörper (12) eine Auslenkbewegung um die Schwenkachse (10) ermöglicht, ist dadurch gekennzeichnet, dass ein Bürstenkörper (12) vorgesehen ist, dessen Borstenträger (16) einen topfartigen, inneren Hohlraum umgibt, in dem zumindest der Großteil der Antriebseinrichtung aufgenommen ist, die mit einem Zugglied (14) verbunden ist, über das die Antriebseinrichtung und mit ihr der Bürstenkörper (12) in einem Abstand von der Schwenklagerung an der Halteeinrichtung (2) aufgehängt sind.

## Beschreibung

Die Erfindung betrifft eine Einrichtung zur Pflege und/oder Reinigung von Nutztieren, mit einem mittels einer Antriebseinrichtung um eine Drehachse in beiden Drehrichtungen antreibbaren Bürstenkörper, der mit einer Halteeinrichtung über eine Schwenklagerung verbunden ist, die eine horizontale Schwenkachse bildet, die dem Bürstenkörper eine Auslenkbewegung um die Schwenkachse ermöglicht.

Tierpflege- und/oder Reinigungseinrichtungen mit rotierenden Bürstenkörpern kommen beim Halten von Nutztieren in einem landwirtschaftlichen Betrieb zum Einsatz und kommen den Bedürfnissen der Tiere, sich zu reiben und zu kratzen, entgegen. Durch den Einsatz derartiger Tierpflege-und/oder Reinigungseinrichtungen reinigen sich die Tiere zumindest teilweise selbst und befreien sich so von Schmutz. Das Bürsten stimuliert und regt den Blutkreislauf der Tiere an. Dergestalt lässt sich der Tierkomfort erhöhen, die Tiere werden ruhiger und ihr Wohlbefinden wird gesteigert. Darüber hinaus wird ein möglicherweise zeitaufwändiges Putzen der Tiere von Hand auf ein Minimum reduziert.

So ist als gattungsgemäße Einrichtung für die Anwendung bei Rindern, insbesondere Milchkühen, aus dem Hauptkatalog 2009 der Suevia Haiges GmbH in Kirchheim/Neckar, Deutschland, (Drucklegung Oktober 2008), beispielsweise die Kuhbürste "Agricow" Modell 3000 (Bestell-Nr.: 130.300) bekannt. Bei dieser Einrichtung ist ein Bürstenkörper vorgesehen, der an einem Ende seines Borstenträgers mit der Schwenklagerung der Halteeinrichtung verbunden ist, wobei die Schwenklagerung so ausgebildet ist, dass der Bürstenkörper gegen eine Rückstellkraft aus einer schrägen Ausgangslage des Bürstenkörpers heraus verschwenkbar ist. Durch die verschwenkbare Anordnung des Bürstenkörpers ist eine Anpassbarkeit für unterschiedlich große Tiere realisiert. Auch können dadurch unterschiedlichen Rücken- und Seitenpartien des Tieres gebürstet werden. Beim Betrieb derartiger Einrichtungen kann es vorkommen, dass beispielsweise Rinder, sei es wegen eines natürlichen Spieltriebs oder auch gefördert durch ein zeitweise störrisches Verhalten, durch ein Dagegenwerfen, Tritte und ähnliches erhebliche Kräfte auf Baukomponenten der Einrichtung ausüben können, beispielsweise über den Bürstenkörper auf die Schwenklagerung der Halteeinrichtung und/oder die Antriebseinrichtung oder durch unmittelbare Krafteinwirkung auf die Halteeinrichtung und die mit ihr verbundene Antriebseinrichtung.

Ausgehend vom genannten Stand der Technik liegt der Erfindung die Aufgabe zugrunde, eine Tierpflege- und/oder Reinigungseinrichtung zur Verfügung zu stellen, die bei einfachem Aufbau einen besonderen Schutz gegen Beschädigungen seitens der Tiere bietet und sich gleichzeitig durch eine besonders effiziente Reinigungs- und/oder Pflegewirkung auszeichnet.

Erfindungsgemäß ist diese Aufgabe durch eine Einrichtung gelöst, die die Merkmale des Patentanspruches 1 in seiner Gesamtheit aufweist.

Demgemäß besteht eine wesentliche Besonderheit der Erfindung darin, dass ein Bürstenkörper in Form einer sogenannten Topfbürste vorgesehen ist, bei der der Borstenträger einen topfartigen, inneren Hohlraum umgibt, in dem zumindest der Großteil der Antriebseinrichtung aufgenommen ist, wobei die Antriebseinrichtung über ein Zugglied mit der Halteeinrichtung derart verbunden ist, dass die Antriebseinrichtung und mit ihr der Bürstenkörper in einem Abstand von der Schwenklagerung aufgehängt sind. Dadurch, dass sich die Halteeinrichtung mit der Schwenklagerung oberhalb des von den Tieren zu betretenden Funktionsbereiches in einem Abstand vom Bürstenkörper befindet, ist die Gefahr einer Beschädigung dieser Bauelemente seitens der Tiere ausgeschlossen. Dadurch, dass weiterhin die Antriebseinrichtung innerhalb des Bürstenkörpers aufgenommen ist und somit keine Antriebsübertragung von der Halteeinrichtung zum Bürstenkörper hin erforderlich ist, ergibt sich eine Vereinfachung der Bauweise, bei der die Antriebseinrichtung geschützt ist. Gleichzeitig stellt die Gewichtskraft der Antriebseinrichtung die Kraft zum Andrücken des vom jeweiligen Tier ausgelenkten Bürstenkörpers zur Verfügung.

Eine besondere Effizienz der Einrichtung ist realisierbar, wenn die Halteeinrichtung einen Träger aufweist, an dem die Schwenklagerung oberhalb des von den Tieren betretbaren Funktionsbereiches derart angeordnet ist, dass sie Auslenkbewegungen des Bürstenkörpers in mehr als einer Schwenkrichtung gegen die Wirkung der Gewichtskraft ermöglicht, die den Bürstenkörper in der vertikal herabhängenden Lage zu halten sucht. Die durch die verhältnismäßig schwergewichtige, innerhalb des Bürstenkörpers befindliche Antriebseinheit erzeugte Gewichtskraft erzeugt eine Andrückkraft der Borsten am Tierkörper, die mit zunehmender Auslenkung ansteigt. Somit ist den Tieren ermöglicht, die Intensität des Scheuerns oder Kratzens zu beeinflussen, indem sich die Tiere mehr oder weniger stark gegen den Bürstenkörper lehnen.

Bei besonders vorteilhaften Ausführungsbeispielen, bei denen sich der Träger der Halteeinrichtung, von einer Verankerungsstelle ausgehend, auskragend über den Funktionsbereich erstreckt und die Schwenklagerung am Endbereich des Trägers angeordnet ist, eröffnet sich die vorteilhafte Möglichkeit, das zu beiden Seiten der Schwenkachse gelegene Areal als Funktionsbereich zu benutzen, wobei der Bürstenkörper von Tieren von einer Seite her oder von der anderen Seite her ausgelenkt werden kann, um den Bürstenkörper am Tierkörper zur Wirkung zu bringen.

Bei besonders vorteilhaften Ausführungsbeispielen weist die Antriebseinrichtung einen elektrischen Getriebemotor auf, dessen Getriebe mit seiner Ausgangswelle mit dem geschlossenen Boden des topfartigen Hohlraumes des Bürstenkörpers in Antriebsverbindung ist.

Hierbei kann das Zugglied in Form eines Gestänges ausgebildet sein, das sich in den Hohlraum des Bürstenkörpers erstreckt und mit dem Getriebe des Getriebemotors verbunden ist.

Um sicherzustellen, dass die Pendelbewegung, die der Bürstenkörper beim Auslenken durch ein betreffendes Tier erfährt, in einer gegebenen Schwenkebene erfolgt, kann das Gestänge an der Schwenkachse der Schwenklagerung an Stellen angreifen, die einen axialen Abstand voneinander aufweisen, so dass die Richtung der Schwenkachse die senkrecht zu ihr verlaufende Schwenkebene festlegt.

In vorteilhafter Weise ist der Betrieb des Getriebemotors mittels einer Schalteinrichtung steuerbar, die in Abhängigkeit von Auslenkbewegungen des Bürstenkörpers aus der vertikal herabhängenden Position den Motor ein- und bei Rückkehr in die vertikal herabhängende Position ausschaltet.

Mit besonderem Vorteil kann die Anordnung hierbei so getroffen sein, dass die Schalteinrichtung ein mit dem Gestänge schwenkbewegliches Betätigungsglied aufweist, das auf ein Schaltelement eines Schalters steuernd einwirkt. Der Schalter kann Bestandteil einer Steuerelektronik sein, mittels deren für den Bürstenkörper Laufzeiten einstellbar sind und die eine Sicherheitsschaltung enthält, die bei zu starker Drehmomentbelastung einen Drehrichtungswechsel bewirkt, so dass bei erhöhtem Widerstand, z.B. durch den aufgewickelten Schwanz eines Tieres, die Einrichtung automatisch anhält und die Drehrichtung des Bürstenkörpers wechselt.

Eine besonders gute Reinigungs- und/oder Pflegewirkung ist erreichbar, wenn der Bürstenkörper vom unteren freien Ende ausgehend die Form eines Kreiszylinders aufweist und in der Nähe des oberen Endes in einen Längenabschnitt übergeht, dessen Durchmesser sich zum Ende hin zunehmend vergrößert. Bei einer derartigen Bürstenform wirkt der untere, kreiszylindrische Abschnitt bei verhältnismäßig geringer Auslenkung besonders wirksam auf die Flanken des betreffenden Tieres ein, während bei starker Auslenkung der im Durchmesser erweiterte, obere Abschnitt des Bürstenkörpers auf Rückenpartien des Tieres einwirkt.

Nachstehend ist die Erfindung anhand eines in der Zeichnung dargestellten Ausführungsbeispieles im Einzelnen erläutert. Es zeigen:
- Fig. 1: eine schematisch stark vereinfacht und in der Art einer Funktionsskizze gezeichnete perspektivische Schrägansicht eines Ausführungsbeispieles der erfindungsgemäßen Einrichtung;
- Fig. 2: eine gegenüber Fig. 1 vergrößerte perspektivische Schrägansicht eines elektrischen Getriebemotors, der im Inneren einer lediglich mit ihrem Umriss angedeuteten, sogenannten Topfbürste als Bestandteil des Ausführungsbeispieles angeordnet ist;
- Fig. 3: eine perspektivische Schrägansicht des Ausführungsbeispieles mit einem im Funktionsbereich befindlichen Nutztier;
- Fig. 4: eine perspektivische Schrägansicht lediglich des an die Schwenklagerung angrenzenden Teilbereiches des Ausführungsbeispieles, und
- Fig. 5 und 6: der Fig. 3 ähnliche Darstellungen, in denen unterschiedliche Auslenkungen der Topfbürste gezeigt sind.

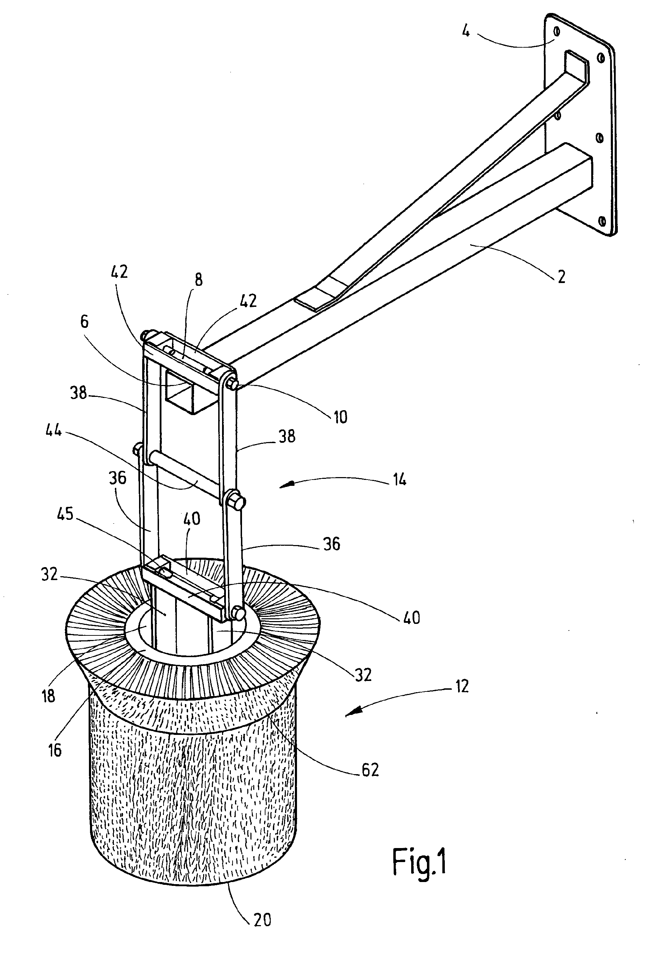

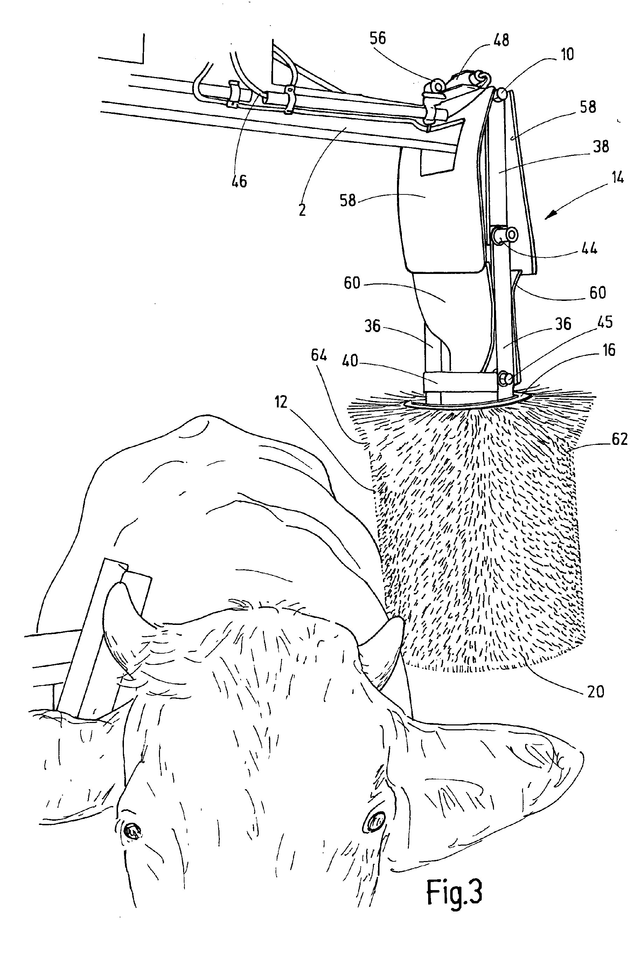

In Fig. 1, die in vereinfachter Darstellung das Funktionsprinzip der Erfindung verdeutlicht, ist ein durch einen Hohlprofilbalken gebildeter Träger mit 2 bezeichnet, der sich von einer Verankerungsstelle 4 ausgehend über einen Funktionsbereich erstreckt, der von Nutztieren betretbar ist und sich beispielsweise in einem Stallgebäude oder einem anderweitigen landwirtschaftlichen Gebäude befindet, das nicht dargestellt ist. Am Endbereich 6 des Trägers 2 befindet sich eine Schwenklagerung 8 mit einer Schwenkachse 10, die horizontal und im rechten Winkel zur Längsachse des Trägers 2 verläuft. Die Schwenklagerung 8 bildet mit der Schwenkachse 10 die Aufhängung für einen um die Schwenkachse 10 frei schwenkbaren Bürstenkörper 12, der über ein Zugglied in Form eines Gestänges 14 derart aufgehängt ist, dass die Länge des Abstandes von der Schwenkachse 10 etwa der axialen Länge des Bürstenkörpers 12 entspricht. Bei letzterem handelt es sich um eine sogenannte Topfbürste, deren Borstenträger 16 einen inneren, zentralen Hohlraum 18 in der Form eines Topfes umgibt, der in dem in Fig. 1 und 3 untenliegenden Ende 20 des Bürstenkörpers 12 einen geschlossenen Topfboden 28 besitzt und am gegenüberliegenden, oberen Ende offen ist.

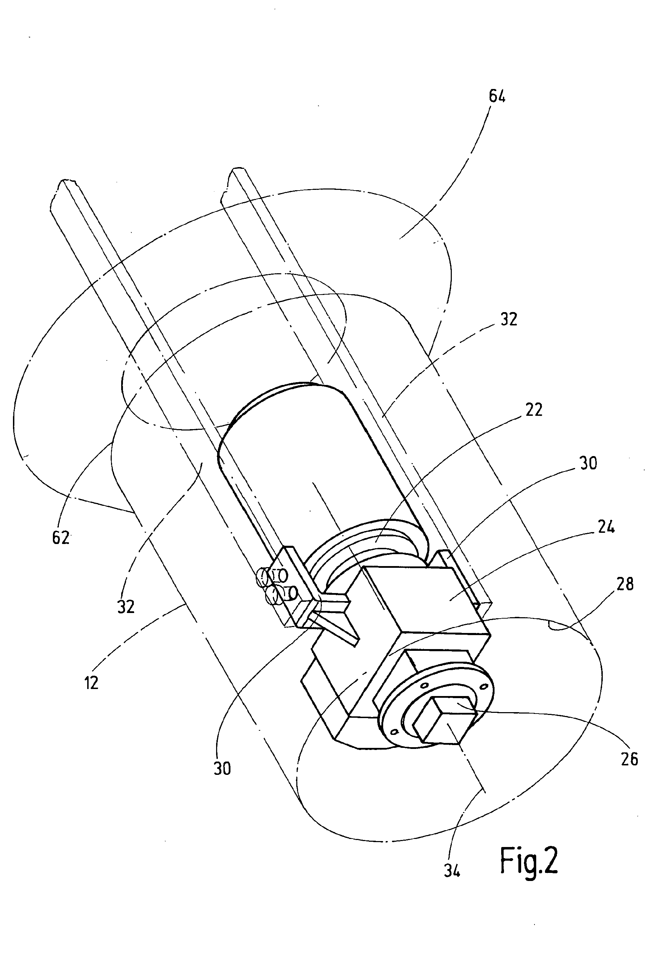

Vom offenen Ende her ist in den Hohlraum 18 die Antriebseinrichtung in Form eines elektrischen Getriebemotors 22 so eingebaut, dass sein Getriebe 24 mit seiner Ausgangswelle 26 mit dem geschlossenen Topfboden 28 in Antriebsverbindung ist, siehe Fig. 2. Diese Fig. zeigt auch, dass am Getriebe 24 seitliche Halterungen 30 vorgesehen sind, mit denen ein erstes Paar von Stäben 32 des Gestänges 14 verschraubt sind. Die Stäbe 32 erstrecken sich im Abstand voneinander parallel zur Drehachse 34 des Bürstenkörpers 12 bis über den oberen Rand des Hohlraumes 18 hinaus, wo sich an die Stäbe 32 ein weiteres Paar von Stäben 36 des Gestänges 14 anschließt. Das Gestänge 14 ist, wie am deutlichsten aus Fig. 1 und 3 ersichtlich ist, mehrteilig aufgebaut, d.h. an die Enden der Stäbe 36 schließt sich ein weiteres Paar Stäbe 38 an, die ihrerseits an ihren Enden auf der Schwenkachse 10 der Schwenklagerung 8 gelagert sind. Bei dieser Form des Gestänges 14, wobei die oberen Stäbe 38 auf der Schwenkachse 10 in einem axialen Abstand (bezüglich der Achse 10) gelagert sind, ist für die Schwenkbewegung des Gestänges 14 und damit des Borstenträgers 12 um die Achse 10 eine Schwenkebene festgelegt.

Wie Fig. 1 am deutlichsten zeigt, erstrecken sich an der Verbindungsstelle der Stäbe 36 mit den Stäben 32 Querleisten 40 als Verstrebungen. Entsprechende Querleisten 42 erstrecken sich zwischen den Enden der oberen Stäbe 38 entlang der Schwenkachse 10 der Schwenklagerung 8. An der Verbindungsstelle zwischen den Stäben 36 und 38 erstreckt sich ein Rundstab 44 zwischen den Stäben.

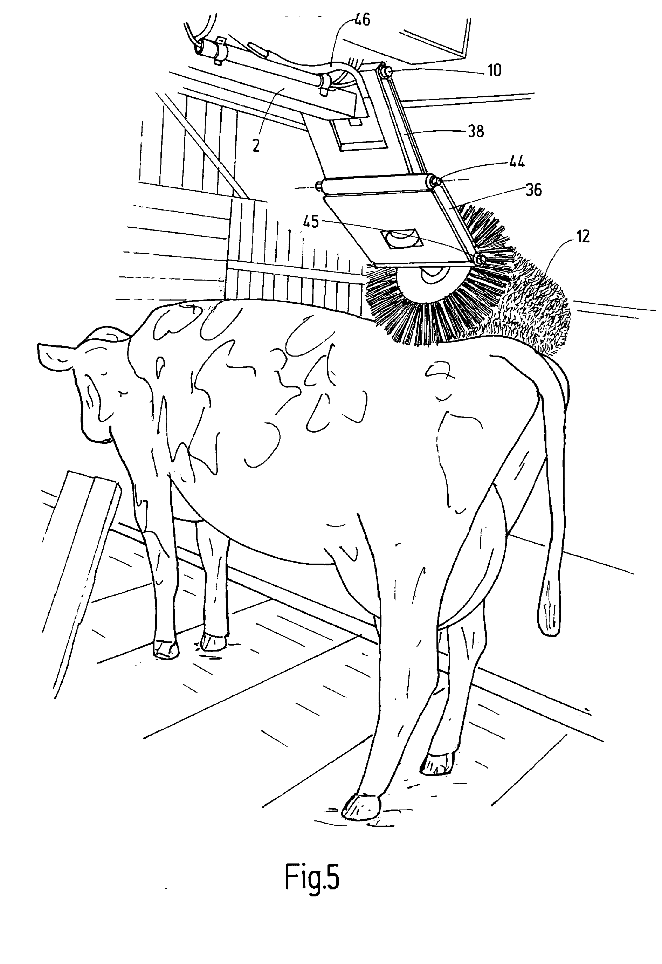

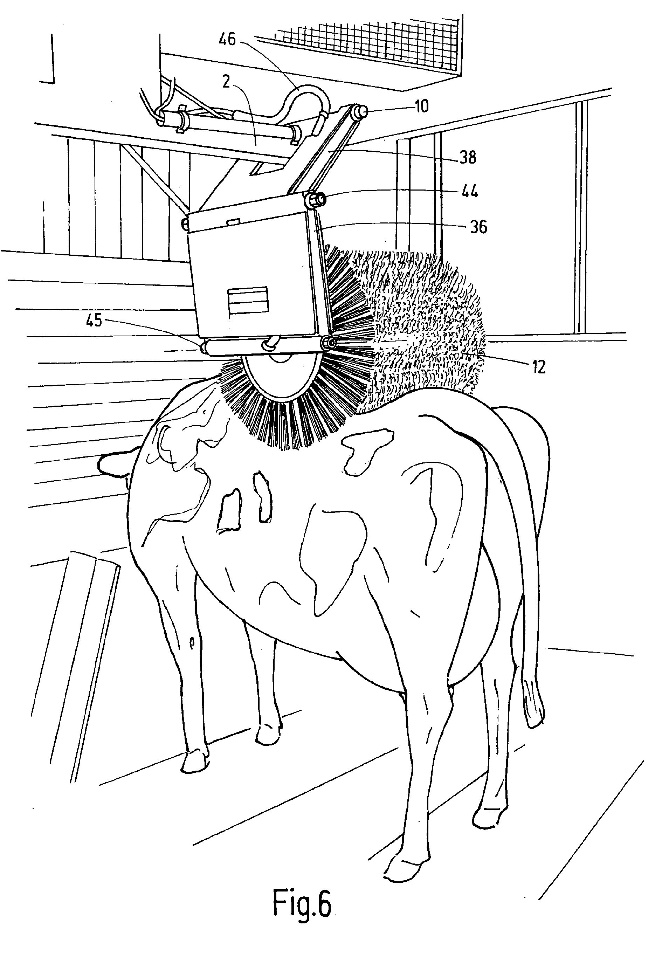

Das Gestänge 14 kann so aufgebaut sein, dass an den Verbindungsstellen der Stäbe 32, 36, 38 jeweils eine starre Verbindung vorgesehen ist, so dass sich die Stäbe 32, 36, 38 in einer gemeinsamen Längsrichtung erstrecken. Andererseits können vorzugsweise die Verbindungsstellen, insbesondere am Rundstab 44, als Gelenkstellen gebildet sein. Auslenkbewegungen des Bürstenkörpers 12 können dadurch nicht nur als Schwenkbewegung um die Schwenkachse 10 erfolgen, sondern der Bürstenkörper 12 kann auch um die Achse des Rundstabes 44 sowie an einem Schwenklager 45 am unteren Ende der Stäbe 36 eine zusätzliche Kippbewegung im Zuge der Auslenkbewegung ausführen. Wie später anhand der Beschreibung der Umfangsform des Bürstenkörpers 12 und der Fig. 5 und 6 noch ausgeführt wird, ergeben sich hierbei Vorteile für die Einwirkung des Bürstenkörpers 12 auf Rückenpartien eines Tieres.

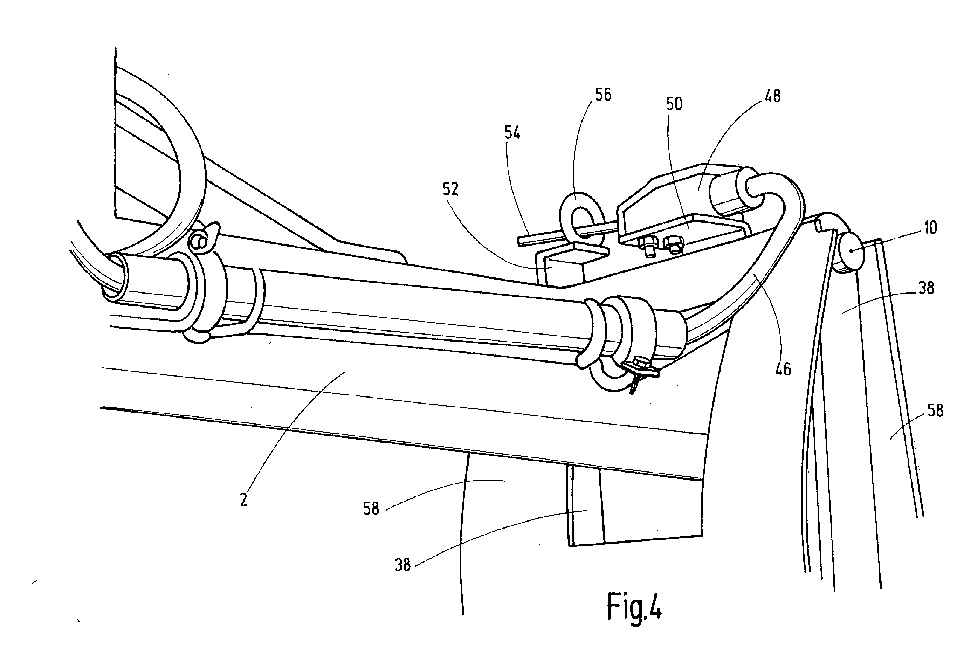

Hinsichtlich der Steuerung und Energieversorgung des innerhalb des Bürstenkörpers 12 befindlichen Getriebemotors 22 sind in Fig. 3 und 4 lediglich Leitungsabschnitte 46 gezeigt, die zu einem Schalter 48 führen, der auf einem Winkelblech 50 sitzt, das auf dem Endbereich 6 des Trägers 2 neben der Schwenklagerung 8 fest angebracht ist. Am oberen Ende des in den Fig. linksseitig gelegenen Stabes 38 des Gestänges 14 befindet sich ein Winkelstück 52, siehe Fig. 4, das bei den Auslenkbewegungen mit dem Stab 38 des Gestänges 14 schwenkbeweglich ist, also eine Relativbewegung gegenüber dem feststehenden Schalter 48 ausführt. Somit kann das Winkelstück 52 als Betätigungsglied für Schaltbewegungen des Schalters 48 dienen. Dieser weist ein fingerförmiges Schaltglied 54 auf, das sich durch eine Öse 56 des Winkelstückes 52 erstreckt und bei der Auslenkung des Bürstenkörpers 12 für entsprechende Schaltbewegungen mitgenommen wird.

Obere Schutzabdeckungen 58 und untere Schutzabdeckungen 60 in Form leicht gewölbter Blechplatten erstrecken sich beidseits der oberen Stäbe 38 bzw. der daran anschließenden Stäbe 36, wobei an den Überlappungsstellen keine Verbindung zwischen den Abdeckungen 58 und 60 vorgesehen ist, so dass durch die Abdeckungen 58, 60 eine Schwenkbewegung des Gestänges 14 um die Achse des Rundstabes 44, falls solches erwünscht wäre, nicht behindert würde.

Die Fig. 1 und 3 zeigen die äußere Formgebung des Bürstenkörpers 12. Wie ersichtlich, weist dieser, vom unteren Ende 20 ausgehend eine kreiszylindrische Form auf, wobei der Durchmesser bis in die Nähe des oberen Endes gleichbleibend ist, wo sich ein Übergangsbereich 62 befindet, von dem aus sich der Außendurchmesser zum oberen Ende hin zunehmend vergrößert. Beim Betrieb der Einrichtung begünstigt diese Formgebung mit dem unterhalb des Übergangsbereiches 62 gelegenen Abschnitt die Einwirkung auf die Flanken eines Tieres, während der sich im Durchmesser vergrößernde, oberhalb gelegene Bereich 64, insbesondere bei zunehmender Auslenkung, die Einwirkung auf Rückenpartien eines Tieres begünstigt. Besonders positiv wirkt sich dies aus, wenn am Gestänge 14, zusätzlich zur Gelenkverbindung an der Schwenkachse 10, eine Gelenkverbindung am Rundstab 44 sowie ein Schwenklager 45 gebildet sind, wodurch sich im Zuge von Auslenkbewegungen eine zusätzliche Kippbewegung des Bürstenkörpers 12 einstellen kann, so dass in dem Bereich 64 des Bürstenkörpers 12 eine intensivere Einwirkung auf Rückenpartien des Tieres ermöglicht ist, wie dies in Fig. 5 und 6 gezeigt ist, wo unterschiedlich starke Auslenkungen des Bürstenkörpers 12 dargestellt sind. Wie ersichtlich, ist hierdurch auch ein Höhenausgleich für unterschiedlich große Tiere vorhanden, so dass der Träger 2 an der Verankerungsstelle 4 fest angebracht sein kann.

Wie bereits angedeutet, kann eine den Schalter 48 enthaltende Steuerelektronik zusätzliche Schalt- und Sicherungsfunktionen ausüben, durch die der Betrieb des Getriebemotors 22 derart gesteuert werden kann, dass bei Überschreiten eines bestimmten Drehmoments, z.B. durch erhöhten Widerstand bei Aufwickeln eines Schwanzes, die Drehung nicht nur angehalten wird, sondern ein Wechsel der Drehrichtung erfolgen kann. Auch kann für die Laufzeit der Bürstenbewegung eine Höchstgrenze vorgesehen sein.

Anstelle eines Getriebemotors 22 kann auch ein sogenannter Topfmotor treten, bei dem das Getriebe in der Motoreinheit integriert ist. Bei bestimmten Motorenkonstruktionen kann auf ein Getriebe gegebenenfalls auch völlig verzichtet werden, und der Motor übernimmt unmittelbar den Direktantrieb der Bürste.

Wenn die Stäbe 36, 38 als Vierkant-Hohlprofil ausgebildet sind, bietet sich die vorteilhafte Möglichkeit, das den Getriebemotor versorgende Kabel geschützt innerhalb des Hohlprofils zu führen. Die Schutzabdeckungen 58, 60 könnten entfallen. Auch kann die Leitung 46 innerhalb des Hohlraumes des Trägers 3 verlegt sein.

## Patentansprüche

1. Einrichtung zur Pflege und/oder Reinigung von Nutztieren, mit einem mittels einer Antriebseinrichtung (22) um eine Drehachse (34) in beiden Drehrichtungen antreibbaren Bürstenkörper (12), der mit einer Halteeinrichtung (2) über eine Schwenklagerung (8) verbunden ist, die eine horizontale Schwenkachse (10) bildet, die dem Bürstenkörper (12) eine Auslenkbewegung um die Schwenkachse (10) ermöglicht, **dadurch gekennzeichnet, dass** ein Bürstenkörper (12) vorgesehen ist, dessen Borstenträger (16) einen topfartigen, inneren Hohlraum (18) umgibt, in dem zumindest der Großteil der Antriebseinrichtung (22) aufgenommen ist, die mit einem Zugglied (14) verbunden ist, über das die Antriebseinrichtung (22) und mit ihr der Bürstenkörper (12) in einem Abstand von der Schwenklagerung (8) an der Halteeinrichtung (2) aufgehängt sind.

2. Einrichtung nach Anspruch 1, **dadurch gekennzeichnet, dass** die Halteeinrichtung einen Träger (2) aufweist, an dem die Schwenklagerung (8) oberhalb eines von den Tieren betretbaren Funktionsbereiches derart angeordnet ist, dass sie Auslenkbewegungen des Bürstenkörpers (12) in mehr als einer Schwenkrichtung gegen die Wirkung der Gewichtskraft ermöglicht, die den Bürstenkörper (12) in der vertikal herabhängenden Lage zu halten sucht.

3. Einrichtung nach Anspruch 1, **dadurch gekennzeichnet, dass** sich der Träger (2) der Halteeinrichtung von einer Verankerungsstelle (4) ausgehend auskragend über den Funktionsbereich erstreckt und die Schwenklagerung (8) am Endbereich (6) des Trägers (2) angeordnet ist.

4. Einrichtung nach Anspruch 3, **dadurch gekennzeichnet, dass** das Zugglied in Form eines Gestänges (14) ausgebildet ist, das sich in den Hohlraum (18) des Bürstenkörpers (12) erstreckt und mit dem Getriebe (24) des Getriebemotors (22) verbunden ist.

5. Einrichtung nach einem der vorstehenden Ansprüche, **dadurch gekennzeichnet, dass** der Betrieb des Getriebemotors (22) mittels einer Schalteinrichtung (48, 54, 56) steuerbar ist, die in Abhängigkeit von Auslenkbewegungen des Bürstenkörpers (12) aus der vertikal herabhängenden Position den Motor (22) ein- und bei Rückkehr in die vertikal herabhängende Position ausschaltet.

6. Einrichtung nach Anspruch 5, **dadurch gekennzeichnet, dass** die Schalteinrichtung (48, 54, 56) ein mit dem Gestänge (14) schwenkbewegliches Betätigungsglied (56) aufweist, das auf ein Schaltelement (54) eines Schalters (48) steuernd einwirkt.

7. Einrichtung nach einem der vorstehenden Ansprüche, **dadurch gekennzeichnet, dass** das Zugglied in Form eines Gestänges (14) gebildet ist, das auf der Schwenkachse (10) der Schwenklagerung (8) an einen axialen Abstand voneinander aufweisenden Stellen angreift, so dass für die Auslenkbewegungen des Bürstenkörpers (12) eine Schwenkebene fest vorgegeben ist.

8. Einrichtung nach einem der vorstehenden Ansprüche, **dadurch gekennzeichnet, dass** der Bürstenkörper (12) vom unteren freien Ende (20) ausgehend die Form eines Kreiszylinders aufweist und in der Nähe des oberen Endes in einen Längenabschnitt (64) übergeht, dessen Durchmesser sich zum oberen Ende hin zunehmend vergrößert.
